# FASCICULE DE BREVET EUROPEEN

(11) **EP 0 876 069 B1**
(45) Date de publication et mention de la délivrance du brevet: **28.07.2004**
(21) Numéro de dépôt: 98401066.0
(22) Date de dépôt: 30.04.1998
(51) Int. Cl.: H04Q 3/52

(54) **Réseau de commutateurs**
Schalternetzwerk
Switch network

(30) Priorité: 02.05.1997 FR 9705448
(43) Date de publication de la demande: 04.11.1998
(73) Titulaire: ALCATEL, 75008 Paris (FR)
(72) Inventeur: Vaillant, Bruno, 31400 Toulouse (FR)
(74) Mandataire: Lamoureux, Bernard

(56) Documents cités:
- EP-A- 0 446 437
- EP-A- 0 615 390
- DE-A- 4 112 932
- FR-A- 2 698 746
- HEIDRICH H ET AL: "REVIEW ON INTEGRATED-OPTICS SWITCH MATRICES IN LINBO3" TRANSACTIONS OF THE INSTITUTE OF ELECTRONICS, INFORMATION AND COMMUNICATION ENGINEERS OF JAPAN, vol. E73, no. 1, 1 janvier 1990, pages 94-98, XP000103973
- "INTEGRATED FIBER OPTICAL SWITCHING ELEMENT" IBM TECHNICAL DISCLOSURE BULLETIN, vol. 32, no. 10B, 1 mars 1990, pages 172-174, XP000097846

## Description

La présente invention concerne un réseau de commutateurs comportant N entrées et T sorties, apte à connecter mutuellement et individuellement P (P ≤ N et P ≤ T) entrées quelconques, choisies parmi lesdites N entrées, et P sorties quelconques, choisies parmi lesdites T sorties.

En agissant sur la position des commutateurs on peut modifier le choix des P entrées ou des P sorties qui sont mutuellement et individuellement connectées.

Ce réarrangement doit se faire en apportant le minimum de perturbations, c'est-à-dire en ne causant que le plus petit nombre possible de modifications des connexions individuelles existantes.

Bien entendu, les termes entrées et sorties tels qu'on vient de les employer sont interchangeables du point de vue du réseau de commutateurs, ce qui se permet de se limiter à l'étude du cas T>N.

De tels réseaux sont implantés par exemple dans les satellites de télécommunications pour établir P canaux de communications simultanés à choisir par l'exploitant entre N ressources possibles et les connecter individuellement à P parmi T équipements d'un même type à associer à ces ressources.

Ils permettent par exemple de faire face à des défaillances de ces équipements (T - P au maximum). On utilise en général deux réseaux symétriques de part et d'autres des équipements, dont les commutateurs sont commandés simultanément.

Cette disposition permet de connecter chacune des P entrées (parmi N) à l'un des P (parmi T) équipements, puis cet équipement par le réseau symétrique à une entrée parmi T de ce dernier qui mènera à une sortie ayant la même position que l'entrée du premier réseau.

Les commutateurs utilisés dans ces réseaux ont quatre pôles et permettent de connecter un premier pôle à un deuxième, un troisième ou un quatrième et, en correspondance, de connecter ledit troisième pôle auxdits quatrième, premier ou deuxième pôles. L'affectation des numéros de pôle étant quelconque, plus précisément, on connaît:
- un commutateur à trois positions permettant de connecter soit un premier pôle à un deuxième et un troisième à un quatrième, soit un premier pôle à un troisième et un deuxième à un quatrième, soit un premier à un quatrième et un deuxième à un troisième.
- un commutateur à quatre positions permettant de connecter soit un premier pôle à un deuxième et un troisième à un quatrième, soit un premier à un troisième, soit un premier à un quatrième et un deuxième à un troisième, soit enfin dans la dernière position un deuxième à un quatrième.

Différentes structures de réseaux de tels commutateurs sont présentés dans le brevet FR-2698746. Dans ces structures, le but essentiel est de minimiser le nombre de commutateurs, en raison de leur poids et de leur coût. La mise en oeuvre de ces structures demande une étude particulière pour chaque application. Cette étude produit une forme de réseau constituée d'entrées, de sorties, de commutateurs et de liaisons. Ces liaisons sont réalisées sous forme de guides d'ondes volumineux et massifs. Les liaisons trop longues doivent être pourvues de tronçons de guide d'onde souples pour absorber les dilatations. Ensuite, l'implantation du réseau est définie, localisant les commutateurs et les guides d'onde qui le composent dans une structure de réseau. La contrainte la plus lourde à cet égard est le cheminement des guides d'ondes, qui sont volumineux et dont les courbures doivent être limitées, ce qui rend souhaitable un trajet aussi rectiligne que possible pour chacun des guides d'onde, objectif contrarié du fait qu'un guide d'onde mis en place gêne le cheminement d'autres guides d'onde qui doivent le croiser, les croisements demandant des changements de niveau. Cela rend nécessaire une étude d'implantation coûteuse aboutissant à des cheminements complexes et entraîne un coût élevé dans la fabrication des guides d'onde, ainsi que, d'une façon générale, un volume et un poids relativement élevés pour le réseau de commutateurs.

Les mêmes inconvénients se retrouvent dans des cas de liaisons réalisées selon d'autres technologies (à lignes coaxiales ou en micro-ruban, notamment).

La présente invention a pour but d'échapper à tous ces inconvénients. Elle a pour objet un réseau de commutateurs dont l'implantation soit simple, dont l'étude puisse bénéficier amplement des réalisations antérieures, dont les liaisons entre commutateurs sont toutes rectilignes et courtes et qui puisse être construit de façon modulaire.

Le réseau de commutateurs de l'invention comprend des commutateurs à quatre pôles permettant de connecter un premier pôle à un deuxième, un troisième ou un quatrième et, en correspondance, de connecter ledit troisième pôle auxdits quatrième, premier ou deuxième pôles. Il se caractérise en ce que lesdits commutateurs à quatre pôles sont disposés en un réseau matriciel comprenant des commutateurs internes connectés chacun, par ses quatre pôles, à quatre commutateurs voisins, et des commutateurs périphériques, situés chacun à la périphérie dudit réseau matriciel, certains au moins desdits commutateurs périphériques étant connectés chacun, par un pôle au moins, à une entrée ou sortie, et par deux autres pôles au moins, à deux commutateurs du réseau.

Bien que des documents de brevets EP 0 615 390 A2 et EP 0 446 437 A2 décrivent des réseaux mantriciels, ceux-ci ne sont pas constitués de commutateurs du type décrit ci-dessus, dont l'emploi dans de tels réseaux n'a pas été considéré jusqu'alors.

Avantageusement, tous lesdits commutateurs périphériques sont prévus pour être connectés chacun, par un pôle au moins, à une entrée ou sortie, et par deux autres pôles au moins, à deux commutateurs du réseau.

Avantageusement encore, certains au moins desdits commutateurs périphériques sont prévus pour être connectés chacun, par deux pôles, à deux entrées ou sorties, et par deux autres pôles, à deux commutateurs du réseau.

Avantageusement encore, tous lesdits commutateurs périphériques sont prévus pour être connectés chacun, par deux pôles, à deux entrées ou sorties, et par deux autres pôles, à deux commutateurs du réseau.

De préférence, en suivant la périphérie dudit réseau des groupes de commutateurs périphériques sont définis, les commutateurs d'un groupe étant connectés tous soit à des entrées, soit à des sorties, tandis que des groupes de commutateurs successifs sont connectés l'un a des entrées et l'autre à des sorties.

Les différents objets et caractéristiques de l'invention apparaîtront plus clairement à la lumière de la description qui va suivre d'exemples de réalisation de l'invention, faite en se référant aux figures annexées qui représentent:
- les figures 1a à 1e différentes représentations d'un commutateur à quatre positions utilisable dans le réseau de la présente invention.
- la figure 2 un exemple de réseau de commutateurs selon un premier mode de mise en oeuvre de l'invention,
- la figure 3, un exemple de réseau de commutateurs selon un deuxième mode de mise en oeuvre de l'invention,
- la figure 4, un exemple de réseau de commutateurs selon un troisième mode de mise en oeuvre de l'invention,
- la figure 5, une variante du réseau de la figure 4,
- la figure 6, le réseau de la figure 5, portant le tracé de connexions établies, et
- la figure 7, une variante du réseau de commutateurs de la figure 5.

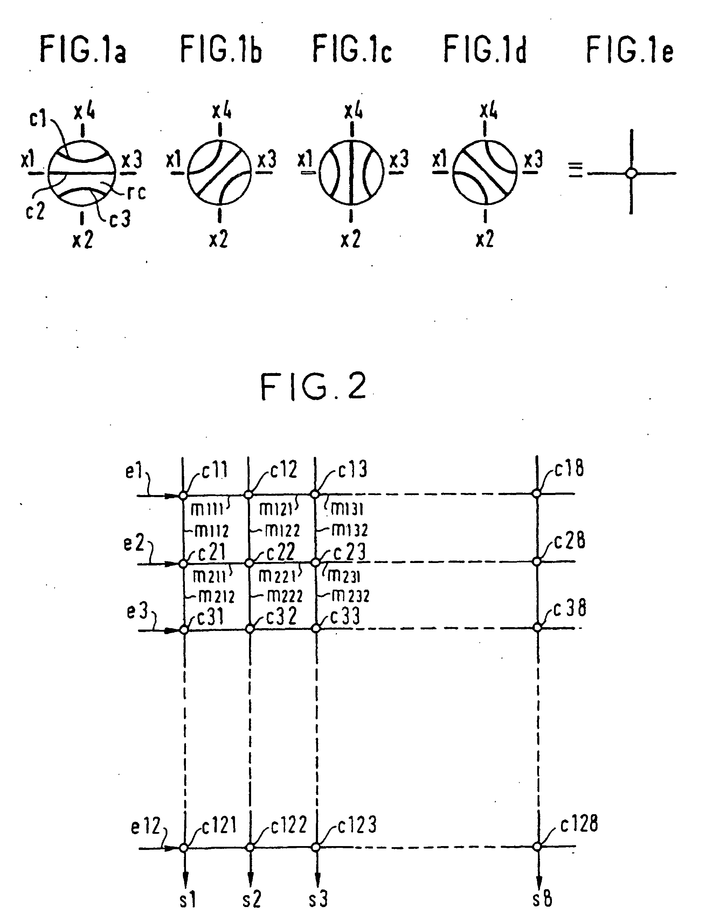

Le commutateur des figures 1a à 1e comprend 4 pôles x1, x2, x3, x4 connectés entre eux, selon sa position, par une pièce rotative rc pourvue de voies de connexion c1, c2, c3. A la figure 1a, il établit la connexion x1-x3. A la figure 1b, il établit les connexions x1-x4 et x2-x3. A la figure 1c, il établit la connexion x4-x2 et, à la figure 1d, il établit les connexions x1-x2 et x4-x3.

La figure 1e représente un symbole commode pour figurer ce commutateur dans les dessins suivants.

Une variante non représentée, de ce commutateur, à 3 positions seulement, établit en même temps les connexions des figures 1a et 1c.

La figure 2 représente un exemple de réseau de commutateurs selon un premier mode de mise en oeuvre de l'invention. Des commutateurs à quatre pôle de l'un ou l'autre des deux types que l'on vient de décrire sont disposés en un réseau matriciel comprenant des commutateurs c11, c12, c13..., c18 d'une première rangée, des commutateurs tels que c21, c22... d'une deuxième rangée et ainsi de suite jusqu'à des commutateurs c121, c122, c123..., C128 d'une douzième rangée.

Le commutateur C11 est connecté par des mailles m111 et m112 aux commutateurs c12 et c21 ; de même le commutateur c12 est connecté par des mailles m121 et m122 aux commutateurs c13 et c22 ; et ainsi de suite le long de la rangée. Le commutateur C21 est connecté par des mailles m211 et m212 aux commutateurs c22 et c31 ; de même le commutateur c22 est connecté par des mailles m221 et m222 aux commutateurs c23 et c32 ; et ainsi de suite le long de la rangée. Le maillage de poursuit ainsi dans toute la matrice.

Des entrées e1, e2,, e3..., e12 sont connectées aux commutateurs c11, c21, c31..., c121. Des sorties s1, s2..., sont connectées aux commutateurs c121, c122, c123..., c128.

On peut distinguer dans ce réseau des commutateurs internes tels que c22, c23, c32, c33..., connectés chacun, par ses quatre pôles, à quatre commutateurs voisins, tels que le commmutateur c22 connecté par ses quatre pôles et les mailles m211, m122, m221 et m222 aux commutateurs c21, c12, c23 et c32, et des commutateurs périphériques, situés chacun a la périphérie du réseau matriciel, tels c11, c12, c13..., c18, c28, c38..., c21, c31..., c121, 122, c123... Certains au moins de ces commutateurs périphériques sont connectés chacun, par un pôle au moins, à une entrée ou sortie, et par deux autres pôles au moins, à deux commutateurs du réseau. Ainsi, le commutateur c11 est connecté à l'entrée e1, possède un pôle non connecté et est connecté aux commutateurs c12 et c21 qui sont aussi des commutateurs périphériques. Les commutateurs c21, c31... sont également connectés à une seule entrée. Le commutateur c121 a par contre deux pôles connectés respectivement à une entrée e12 et une sortie s1.

Le réseau de la figure 2 permet d'établir jusqu'à 8 connexions entre 8 entrées désignées parmi les entrées e1 à e12 et les 8 sorties s1 à s8, à la condition que ces connexions ne se croisent pas, c'est-à-dire que des entrées selon l'ordre de e1 à e12 soient connectées à des sorties selon s1 à s8. Cela pose une contrainte dans le choix des connexions à établir, acceptable dans des applications pratiques.

Le réseau de la figure 2 s'il est construit en suivant la disposition de ses éléments sur la figure, offre déjà la caractéristique recherchée de ne posséder entre les commutateurs que des mailles qui vont d'un commutateur à un commutateur voisin, donc n'en croisent aucune autre et peuvent être très courtes. De plus, il est aisément possible de dériver d'un réseau existant tel que celui de la figure 2, de type 8 x 12, un réseau semblable plus grand ou plus petit. Cela simplifie largement les études lors de chaque nouvelle application. De plus, dans sa réalisation, le réseau de la figure peut être composé à partir d'éléments modulaires, des "pavés" de 2 x 2 commutateurs par exemple (C11, C12, C21, C22, par exemple) connectés entre eux par des nappes de mailles rectilignes et parallèles.

Par contre, on peut objecter que des commutateurs périphériques ont un pôle, voire deux pôles inutilisés, ce qui ne va pas dans le sens d'une utilisation efficace des éléments du réseau.

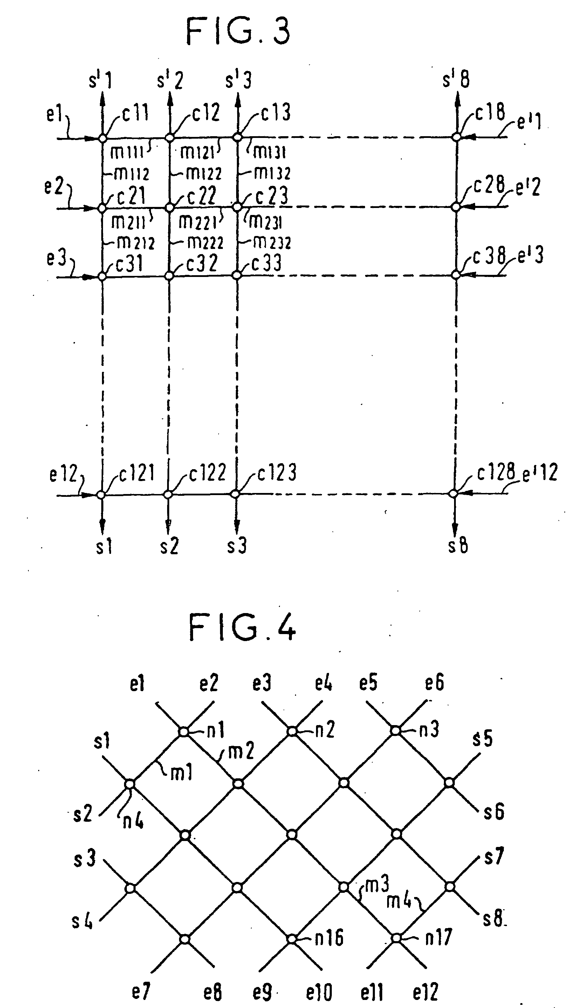

La figure 3 représente un exemple de réseau de commutateurs selon un deuxième mode de mise en oeuvre de l'invention, dérivé de celui de la figure 2, mais dans lequel, déjà, les commutateurs sont mieux utilisés.

Ce deuxième réseau est semblable à celui de la figure 2, les mêmes références ayant été conservées pour désigner les mêmes éléments ; il ne diffère du premier que par le fait que tous les commutateurs périphériques sont prévus pour être connectés chacun, par un pôle au moins, à une entrée ou sortie, et par deux autres pôles au moins, à deux commutateurs du réseau. C'est ainsi que les commutateurs c11, c12, c13..., c18 donnent accès à des sorties s'1, s'2, s'3..., s'8 et que les commutateurs c18, c28, c38..., c128 donnent accès à des entrées e'1, e'2, e'3..., e'12.

Du fait que la structure générale du réseau est conservée, les avantages qui s'y attachent, sont obtenus, tout comme dans le réseau de la figure 2.

La remarque faite précédemment à propos des contraintes portant sur les connexions qui peuvent être établies dans le réseau est modifiée en ce que, en suivant la périphérie du réseau, des groupes de commutateurs périphériques sont définis (c11..., c18 ; c18..., c128 ; c128 ..., c121 ; c121..., c11), les commutateurs d'un groupe étant connectés tous soit à des entrées, soit à des sorties, tandis que des groupes de commutateurs successifs sont connectés l'un a des entrées et l'autre à des sorties. On voit tout de suite que cela ajoute de la souplesse, sans toutefois aller jusqu'à supprimer toute contrainte, puisque jusqu'à quatre groupes de connexions peuvent être distingués, entre à chaque fois une partie d'un groupe de commutateur "d'entrées" et une partie connexe d'un groupe de commutateurs "de sorties", par exemple entre c11, c21, c31 et c11, c12, c13. Bien entendu, les connexions d'un groupe de connexions ne doivent pas s'entrecroiser ; il en va de même entre les groupes.

On peut cependant observer que les commutateurs périphériques, sauf ceux qui se trouvent aux angles du réseau, ne donnent accès qu'à une entrée ou une sortie. Ils la connectent chacun utilement à une maille du réseau, ce qui entraîne que deux pôles du commutateur au plus sont utilisés à la fois et, par conséquent que l'utilisation de ces commutateurs est médiocre.

La figure 4 représente un exemple de réseau de commutateurs selon un troisième mode de mise en oeuvre de l'invention, conforme à celui de la figure 1, en ce qu'il sert à établir des trajets de connexion entre 12 entrées e1 à e12 et 8 sorties s1 à s8 et en ce que les commutateurs à quatre pôles sont disposés en matrice. Toutefois, ces commutateurs, référencés n1, n2, n3..., n16, n17, et les mailles m1, m2, m3, m4 qui les connectent entre eux constituent une matrice qui, en quelque sorte, est en biais, par rapport à un agencement rectangulaire d'entrées et de sorties, comme cela apparaît sur le dessin, ou encore, qui a une forme en lozange ou en parallélogramme.

Géométriquement, la forme en lozange ou parallélogramme, plutôt qu'en carré ou en rectangle, n'affecte pas les avantages découlant d'une structure en matrice, tels qu'ils ont été énoncés au sujet du réseau de la figure 2.

Les groupes "d'entrées" et "de sorties" du réseau de la figure 3 se retrouvent dans celui de la figure 4. La même remarque relative aux contraintes portant sur les groupes de commutateurs "d'entrées" et "de sorties" s'applique encore mutatis mutandis.

Par rapport aux arrangements des figures 2 et 3, celui de la figure 4 offre l'avantage d'un meilleur rapport entre le nombre d'entrées/sorties et le nombre de commutateurs. En effet, dans le cas d'une matrice 8 x 12, le réseau de la figure 2 comprend 96 commutateurs, celui de la figure 3, 24 commutateurs et celui de la figure 4, 17 commutateurs seulement. Bien entendu, le nombre de trajets de connexion disponibles diminue également, mais cela n'est pas un inconvénient dans certaines applications.

Cette meilleure efficacité résulte de ce que certains au moins des commutateurs périphériques sont prévus pour être connectés chacun, par deux pôle, à deux entrées ou sorties, et par deux autres pôles, à deux commutateurs du réseau. Ainsi, le commutateur n1 est connecté à deux entrées e1 et e2, tandis que le commutateur n4 est connecté à deux sorties s1 et s2.

Plus particulièrement, dans le cas du réseau de la figure 4, tous les commutateurs périphériques sont prévus pour être connectés chacun, par deux pôle, à deux entrées ou sorties, et par deux autres pôles, à deux commutateurs du réseau.

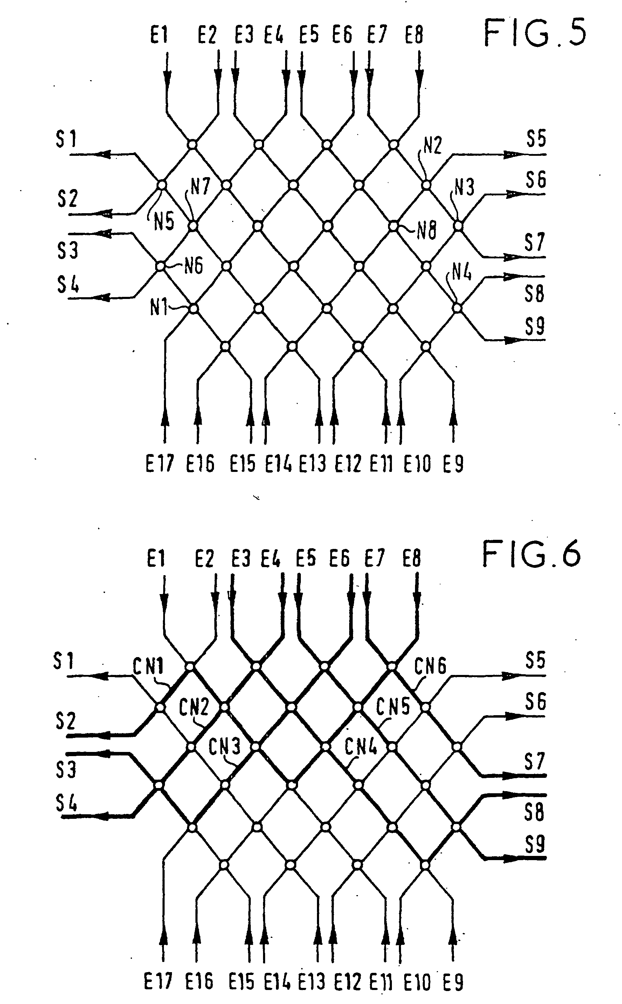

La figure 5 représente une variante du réseau de commutateurs de la figure 4. La structure en est la même, mais il permet le raccordement de 17 entrées E1 à E17 et de 9 sorties S1 à S9. L'adjonction de commutateurs supplémentaires dans la matrice constituant ce réseau augmente le nombre de trajets possibles pour les connexions et libère sur certains commutateurs tels que N1 et N2 un accès auquel est connecté une entrée (E17) ou une sortie (S5).

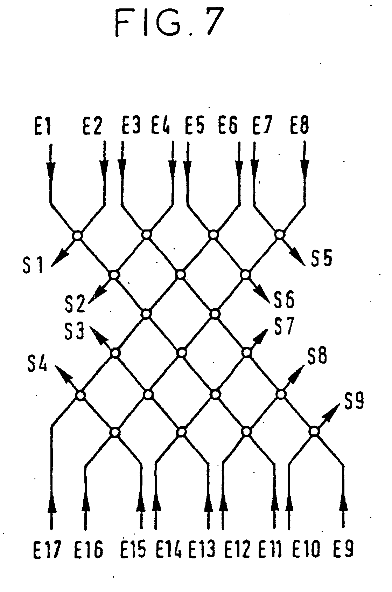

La figure 6 représente, à titre d'exemple d'exploitation du réseau de commutateurs de la figure 5, en traits gras, les trajets de six connexions s'étendant, dans l'ordre, de E3 à E8, vers S2 à S4 et S7 à S9.

La figure 7 représente une variante du réseau de commutateurs de la figure 5 dans laquelle, au prix de contraintes portant sur le nombre et le tracé de connexions à établir, le nombre de commutateurs peut être drastiquement réduit, en supprimant des commutateurs périphériques N2, N3, N4, N5, N6 de la matrice de la figure 5 et même deux commutateurs internes N7 et N8 pour connecter directement les sorties S1 à S9 aux pôles ainsi rendus libres des commutateurs subsistants de la matrice.

On voit ainsi, par les réseaux des figures 5 et 7 qu'il est possibles aisément de concevoir des variantes du réseau de commutateurs de l'invention pour faire face à des capacités plus grandes ou plus petites, aussi bien en nombres d'accès d'entrée et de sortie qu'en nombre de connexions permises dans le réseau. La caractéristique de modularité mentionnée à propos du réseau de la figure 2 peut par ailleurs être conservée pour l'essentiel dans les réseaux des figures suivantes.

## Revendications

1. Réseau de commutateurs comportant N accès d'entrée et T accès de sortie, apte à connecter mutuellement et individuellement P (P ≤ N et P ≤ T) entrées quelconques et P sorties quelconques, chacun desdits commutateurs ayant quatre pôles et permettant de connecter un premier pôle à un deuxième, un troisième ou un quatrième et, en correspondance, de connecter ledit troisième pôle auxdits quatrième, premier ou deuxième pôles, ce réseau étant **caractérisé en ce qu'**il comprend des commutateurs disposés en un réseau matriciel comprenant des commutateurs internes connectés chacun, par ses quatre pôles, à quatre commutateurs voisins, et des commutateurs périphériques, situés chacun à la périphérie dudit réseau matriciel, certains au moins desdits commutateurs périphériques (c21, c31... ; c122, c123...) étant connectés chacun, par un pôle au moins, à une entrée (e1, e2...) ou sortie (s1, s2...), et par deux autres pôles au moins, à deux commutateurs du réseau.

2. Réseau de commutateurs conforme à la revendication 1, **caractérisé en ce que** tous lesdits commutateurs périphériques sont prévus pour être connectés chacun, par un pôle au moins, à une entrée ou sortie, et par deux autres pôles au moins, à deux commutateurs du réseau.

3. Réseau de commutateurs conforme à la revendication 1, **caractérisé en ce que** certains au moins desdits commutateurs périphériques (n1, n2, n3, n4, n16, n17) sont prévus pour être connectés chacun, par deux pôles, à deux entrées ou sorties, et par deux autres pôles, à deux commutateurs du réseau.

4. Réseau de commutateurs conforme à la revendication 3, **caractérisé en ce que** tous lesdits commutateurs périphériques sont prévus pour être connectés chacun, par deux pôle, à deux entrées ou sorties, et par deux autres pôles, à deux commutateurs du réseau.

5. Réseau de commutateurs conforme à la revendication 1, **caractérisé en ce que**, en suivant la périphérie dudit réseau des groupes de commutateurs périphériques sont définis (c11..., c18 ; c18..., c128 ; c128 ..., c121 ; c121..., c11), les commutateurs d'un groupe étant connectés tous soit à des entrées, soit à des sorties, tandis que des groupes de commutateurs successifs sont connectés l'un a des entrées et l'autre à des sorties.

## Claims

1. A switch network comprising N input ports and T output ports for mutually and individually connecting any P (P ≤ N and P ≤ T) inputs and any P outputs, each of said switches having four poles and being capable of connecting the first pole to a second, a third or a fourth and correspondingly connecting said third pole to said fourth, first or second poles, the network being **characterized in that** said network includes switches disposed in a matrix network including internal switches each connected by its four poles to four adjacent switches and peripheral switches each located on the periphery of said matrix network, at least some of said peripheral switches (c21, c31...; c122, c123...) being connected by at least one pole to an input (e1, e2...) or an output (s1, s2...) and by at least two other poles to two switches of said network.

2. The switch network claimed in claim 1 **characterized in that** all said peripheral switches are adapted to be connected by at least one pole to an input or an output and by at least two other poles to two switches of said network.

3. The switch network claimed in claim 1 **characterized in that** at least some of said peripheral switches (n1, n2, n3, n4, n16, n17) are adapted to be connected by two poles to two inputs or outputs and by two other poles to two switches of said network.

4. The switch network claimed in claim 3 **characterized in that** all said peripheral switches are adapted to be connected by two poles to two inputs or outputs and by two other poles to two switches of said network.

5. The switch network claimed in claim 1 **characterized in that** along the periphery of said network groups, peripheral switches (c11..., c18; c18..., c128; c128..., c121; c121..., c11) are defined, all switches of a group are connected either to inputs or to outputs and successive groups of switches are connected alternately one group to inputs and the other to outputs.

## Patentansprüche

1. Schalternetzwerk, beinhaltend N Eingangszugänge und T Ausgangszugänge, das dafür geeignet ist, gegenseitig und einzeln P (P ≤ N und P ≤ T) beliebige Eingänge und beliebige P Ausgänge zu verbinden, wobei jeder der besagten Schalter vier Pole hat und es gestattet, einen ersten Pol mit einem zweiten, einem dritten oder einem vierten zu verbinden und entsprechend den besagten dritten Pol mit den besagten vierten, ersten oder zweiten Polen zu verbinden, und wobei dieses Netzwerk **dadurch gekennzeichnet ist, daß** es Schalter beinhaltet, die zu einem Matrixnetzwerk angeordnet sind, welches interne Schalter, von denen jeder über seine vier Pole mit vier benachbarten Schaltern verbunden ist, sowie Peripherieschalter beinhaltet, die jeweils am Rand des besagten Matrixnetzwerks angeordnet sind, wobei zumindest bestimmte der besagten Peripherieschalter (c21, c31...; c122, c123...) jeweils über mindestens einen Pol mit einem Eingang (e1, e2...) oder Ausgang (s1, s2...) und über mindestens zwei weitere Pole mit zwei Schaltern des Netzwerks verbunden sind.

2. Schalternetzwerk gemäß Anspruch 1, **dadurch gekennzeichnet, daß** alle besagten Peripherieschalter dafür vorgesehen sind, jeweils einzeln über mindestens einen Pol mit einem Eingang oder Ausgang und über mindestens zwei andere Pole mit zwei Schaltern des Netzwerks verbunden zu werden.

3. Schalternetzwerk gemäß Anspruch 1, **dadurch gekennzeichnet, daß** zumindest bestimmte der besagten Peripherieschalter (n1, n2, n3, n4, n16, n17) dafür vorgesehen sind, jeweils einzeln über zwei Pole mit zwei Eingängen oder Ausgängen und über zwei weitere Pole mit zwei Schaltern des Netzwerks verbunden zu werden.

4. Schalternetzwerk gemäß Anspruch 3, **dadurch gekennzeichnet, daß** alle besagten Peripherieschalter dafür vorgesehen sind, jeweils einzeln über zwei Pole mit zwei Eingängen oder Ausgängen und über zwei weitere Pole mit zwei Schaltern des Netzwerks verbunden zu werden.

5. Schalternetzwerk gemäß Anspruch 1, **dadurch gekennzeichnet, daß** am Rand des besagten Netzwerks Gruppen von Peripherieschaltern (c11..., c18; c18..., c128; c128..., 121; c121..., c11) definiert sind, wobei die Schalter einer Gruppe alle entweder mit Eingängen oder Ausgängen verbunden sind, während von aufeinanderfolgenden Schaltergruppen jeweils die eine mit Eingängen und die andere mit Ausgängen verbunden ist.
